# EUROPÄISCHE PATENTANMELDUNG

(11) **EP 1 619 071 A1**
(43) Veröffentlichungstag der Anmeldung: **25.01.2006**
(21) Anmeldenummer: 05103982.4
(22) Anmeldetag: 12.05.2005
(51) Int. Cl.: B60N 2/46, B60N 2/02

(54) **Kraftfahrzeug-Armauflage**

(30) Priorität: 22.07.2004 DE 202004011953 U
(71) Anmelder: Polytec Interior GmbH, 82538 Geretsried (DE)
(72) Erfinder: Dyckerhoff, Dirk, 82402 Seeshaupt (DE)
(74) Vertreter: von Kirschbaum, Alexander

(57) **Zusammenfassung**

Eine höhenverstellbare Kraftfahrzeug-Armauflage weist ein an einer Türinnenverkleidung (12) angeordnetes Armauflageelement (10) auf. Ferner ist ein mit der Fahrzeugtür, insbesondere dem Türinnenblech verbundenes Befestigungselement zur Befestigung des Armauflageelementes (10) vorgesehen. Zur Höhenverstellung des Armauflageelementes (10) kann das Auflageelement (10) um eine Schwenkachse (20) verschwenkt werden.

## Beschreibung

Die Erfindung betrifft eine höhenverstellbare Kraftfahrzeug-Armauflage, die an einer Türinnenverkleidung eines Kraftfahrzeuges angeordnet ist.

Kraftfahrzeug-Armauflagen weisen ein Auflageelement auf, das an der Türinnenverkleidung angeordnet ist. Aus Stabilitätsgründen muss das Armauflageelement mit der Kraftfahrzeugtür, insbesondere dem Türinnenblech, verbunden sein. Um eine Höhenverstellung einer Kraftfahrzeug-Armauflage, die an der Türinnenverkleidung angeordnet ist, zu ermöglichen, ist es aus DE 101 38 980 bekannt, die Armauflage doppelwandig auszubilden bzw. einen zusätzlichen Einsatz vorzusehen. Hierbei ist ein stationäres Basisteil fest mit der Fahrzeugtür verbunden. Innerhalb des Basisteils kann sodann ein horizontal verschiebbares Armauflageelement angeordnet werden. Bei der in DE 101 38 980 beschriebenen höhenverstellbaren Armauflage handelt es sich um ein mechanisch aufwändiges und somit teures Bauteil.

Aufgabe der Erfindung ist es, eine höhenverstellbare Kraftfahrzeug-Armauflage zu schaffen, die einfach ausgebildet und kostengünstig herstellbar ist.

Die Lösung der Aufgabe erfolgt erfindungsgemäß durch die Merkmale des Anspruchs 1.

Erfindungsgemäß ist die höhenverstellbare Kraftfahrzeug-Armauflage zur Höhenverstellung schwenkbar. Die Armauflage weist somit eine Schwenkachse auf, um die das Armauflageelement verschwenkbar ist. Hierbei ist die Schwenkachse in einer besonders bevorzugten Ausführungsform konzentrisch zu dem Befestigungselement, mit dem die Armauflage an der Fahrzeugtür befestigt ist, angeordnet. Ebenso kann das Befestigungselement selbst als Schwenkachse ausgebildet sein. Ebenso kann das Befestigungselement mit der Türinnenverkleidung, beispielsweise durch das Vorsehen von großflächigen Halteelementen und dgl., verbunden sein. Ferner ist auch eine Verbindung des Befestigungselementes mit der Fahrzeugtür und der Türinnenverkleidung möglich.

Eine verschwenkbare Armauflage hat hierbei den wesentlichen Vorteil, dass ein im Wesentlichen herkömmliches Armauflageelement verwendet werden kann. Eine aufwändige Konstruktion eines beispielsweise in einem Basiselement verfahrbaren Einsatzes ist nicht erforderlich. Vielmehr erfolgt in besonders bevorzugter Ausführungsform ein Verschwenken um das Befestigungselement, das zwingend erforderlich ist, um eine ausreichende Stabilität bzw. eine ausreichend gute Befestigung des Armauflageelementes zu gewährleisten.

Es wurde festgestellt, dass eine horizontale Höhenverstellung der Armauflage nicht erforderlich ist, da die Höhenverstellung üblicherweise nur in geringen Bereichen erfolgt. Es ist somit entsprechend der erfindungsgemäßen Kraftfahrzeug-Armauflage möglich, eine verschwenkbare Armauflage vorzusehen, da die durch das Verschwenken entstehende Neigung der Armauflage für den Benutzer nicht unangenehm ist.

Die Schwenkachse, die vorzugsweise konzentrisch zu dem Befestigungselement angeordnet ist, ist vorzugsweise im vorderen, d. h. dem in Richtung der Motorhaube weisenden Bereichs des Armauflageelementes angeordnet. Insbesondere ist die Schwenkachse auf Höhe eines Haltegriffes angeordnet, der zwischen der Armauffage und der Türinnenverkleidung angeordnet ist.

Vorzugsweise weist die Kfz-Armauflage ein elektrisch und/ oder mechanisch und/ oder pneumatisch betätigbares Halteelement zur Lagefixierung des Armauflageelementes auf. Hierbei kann es sich bei dem Halteelement um eine lösbare Rast- und/ oder Klemmverbindung handeln. Diese kann beispielsweise mechanisch insbesondere durch einen Hebelmechanismus, aber auch elektrisch durch einen entsprechenden Stellmotor betätigt werden. Es ist somit möglich, durch Betätigen des Halteelementes die Armauflage zu lösen, sodann beispielsweise durch ein Verschwenken von Hand die Lage der Armauflage zu verändern und diese sodann durch erneutes Betätigen des Halteelementes wieder zu fixieren.

Bei einer weiteren bevorzugten Ausführungsform weist die Armauflage ferner ein Betätigungselement zur Höhenverstellung auf. Das Betätigungselement kann elektrisch und/ oder mechanisch und/ oder pneumatisch ausgebildet sein. Insbesondere wirkt das Betätigungselement mit dem Halteelement derart zusammen, dass durch Betätigen des Betätigungselementes ein Lösen oder Fixieren des Halteelementes erfolgt. Ggf. können das Betätigungselement und das Halteelement als eine Einheit ausgebildet sein.

Besonders bevorzugt ist es hierbei, als Betätigungselement einen Stellmotor vorzusehen, der vorzugsweise ein bewegliches Stellelement wie ein Zahnrad antreibt. Das bewegliche Stellelement wirkt mit einem ortsfesten Stellelement zusammen. Bei dem ortsfesten Stellelement kann es sich beispielsweise um eine Zahnstange handeln, in die das bewegliche Stellelement bzw. das Zahnrad eingreift. Hierdurch ist durch einfaches Betätigen eines Schalters eine Höhenverstellung durch Verschwenken des Armauflageelementes möglich. Bei Erreichung der gewünschten Stellung wird vorzugsweise ebenfalls elektrisch durch ein entsprechendes Signal ein Halteelement zur Lagefixierung betätigt.

Nachfolgend wird die Erfindung an Hand einer bevorzugten Ausführungsform unter Bezugnahme auf die anliegenden Zeichnungen näher erläutert.

Es zeigen:
- Fig. 1:: eine schematische perspektivische Ansicht einer Türinnenverkleidung mit Armauflage,
- Fig. 2:: eine schematische Schnittansicht entlang der Linie II-II in Fig. 1,
- Fig. 3:: eine schematische Ansicht eines Betätigungselementes des Armauflageelementes und
- Fig. 4:: eine schematische Ansicht eines Halteelementes des Armauflageelementes.

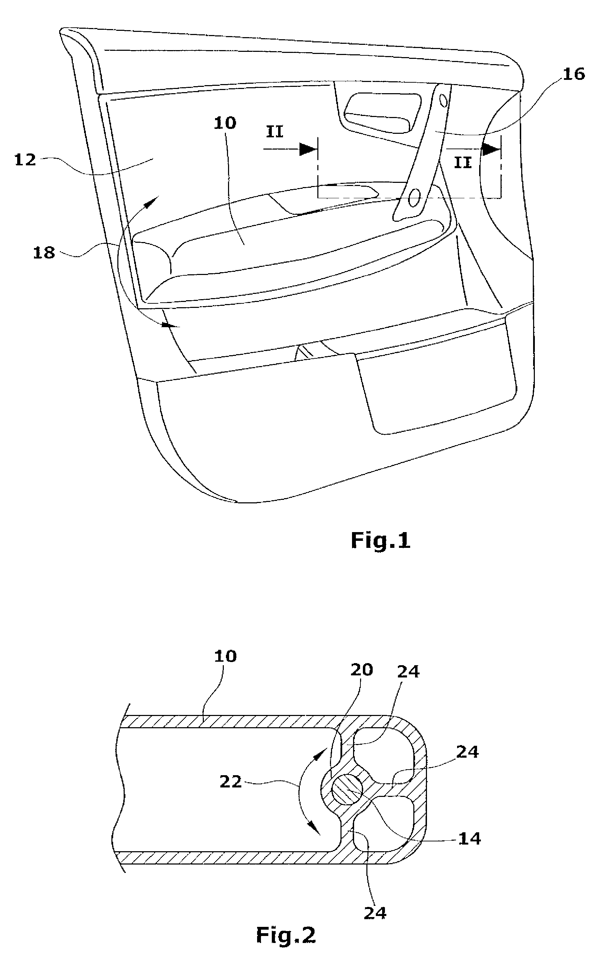

Eine Armauflage weist ein Armauflageelement 10 auf, das an einer Türinnenverkleidung 12 angeordnet ist, d. h. auf der Innenseite einer Tür eines Kraftfahrzeuges vorgesehen ist. Das Armauflageelement 10 ist über ein Befestigungselement 14 (Fig. 2) mit der Fahrzeugtür bzw. dem Türinnenblech verbunden. Mit Hilfe des Befestigungselementes ist das Armauflageelement 10 stabil befestigt und kann die erforderlichen Kräfte aufnehmen. Eine Befestigung des Armauflageelements 10 ausschließlich an der Türinnenverkleidung wäre aus Stabilitätsgründen nicht ausreichend. Des weiteren ist im Bereich des Befestigungselementes 14 ein Halteelement 16 (Fig. 1) mit dem Armauflageelement 10 sowie der Türinnenverkleidung 12 verbunden. Bei dem Halteelement 16 handelt es sich um das üblicherweise an dem vorderen Ende des Armauflageelementes d. h. an dem in Richtung der Motorhaube weisenden Ende des Armauflageelements angeordneten Halteelement.

Um ein Verschwenken des Armauflageelements 10 in Richtung eines Pfeils 18 zu ermöglichen, ist im dargestellten Ausführungsbeispiel das Befestigungselement 14 von einer als Schwenkachse dienenden Hülse 20 umgeben. Die Hülse 20 kann in Richtung eines Pfeils 22 um das Befestigungselement 14 verschwenkt werden. Über Stege 24 ist die Hülse 20 mit dem Armauflageelement 10 verbunden.

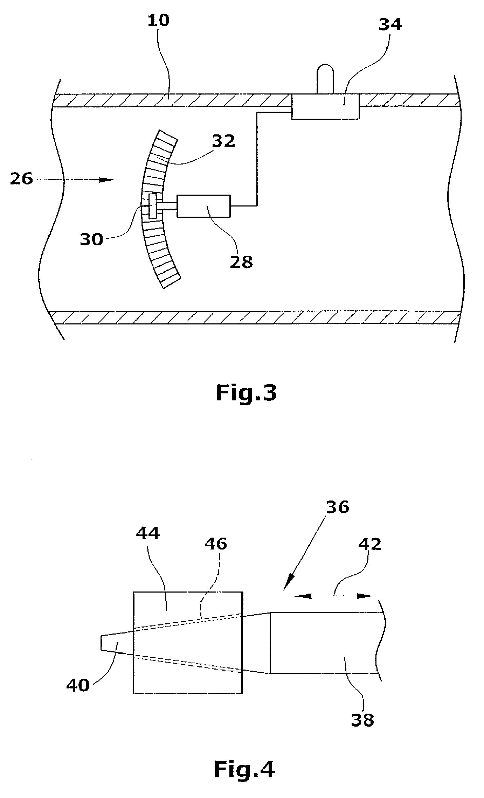

Um ein Schwenken des Armauflageelementes 10 in Richtung des Pfeils 18 zu ermöglichen, ist ein Betätigungselement 26 (Fig. 3) vorgesehen. Das Betätigungselement 26 ist innerhalb des Armauflageelementes angeordnet und weist im dargestellten Ausführungsbeispiel einen Stellmotor 28 auf, der ein bewegliches Stellelement 30 bzw. ein Zahnrad 30 antreibt. Das Zahnrad 30 greift in ein ortsfestes Stellelement 32, bei dem es sich im dargestellten Ausführungsbeispiel um eine Zahnstange handelt. Die Zahnstange 32 ist an der Türinnenverkleidung angeordnet. Durch Betätigen eines Schalters 34, der an der Oberseite des Armauflageelementes angeordnet ist, wird der Stellmotor 28 ein- bzw. ausgeschaltet. Durch Betätigen des Schalters 34 in die entsprechende Richtung kann die Drehrichtung des Stellmotors 28 und somit die Schwenkrichtung des Armauflageelements 10 festgelegt werden.

Um das Armauflageelement 10 in der gewünschten Stellung zu fixieren, kann zusätzlich ein Halteelement 36 (Fig. 4) vorgesehen sein. Das Halteelement 36 weist im dargestellten Ausführungsbeispiel einen Stift 38 mit einem konisch zulaufenden Ende 40 auf. Der Stift 38 kann mit Hilfe eines weiteren Stellmotors oder eines entsprechenden Hebelmechanismus in Richtung des Pfeils 42 hin und her geschoben werden. Die Spitze 40 wird hierbei zum klemmenden Halten in ein Halteteil 44, das ebenfalls eine konische Bohrung 46 aufweist, eingeschoben. Das Halteteil 44 ist hierbei mit der Türinnenverkleidung und der Stift 38 mit dem Armauflageelement 10 verbunden. Anstelle des dargestellten Halteelements 36 kann auch ein anderer Rast- und/ oder Klemmmechanismus vorgesehen sein. Hierbei wird der Rastund/ oder Klemmmechanismus insbesondere vor dem Betätigen des Betätigungselementes 26 gelöst und nach Erreichen der gewünschten Stellung wieder fixiert. Dies erfolgt vorzugsweise, z. B. über einen Stellmotor, automatisch.

## Patentansprüche

1. Höhenverstellbare Kraftfahrzeug-Armauflage mit
einem an einer Türinnenverkleidung (12) angeordneten Armauflageelement (10) und
einem mit der Fahrzeugtür und/ oder der Türinnenverkleidung (12) verbundenen Befestigungselement (14) zur Befestigung des Armauflageelementes (10),
**dadurch gekennzeichnet, dass**
das Armauflageelement (10) zur Höhenverstellung um eine Schwenkachse (20) verschwenkbar ist.

2. Höhenverstellbare Kraftfahrzeug-Armauflage nach Anspruch 1 , **dadurch gekennzeichnet, dass** die Schwenkachse (20) konzentrisch zu dem Befestigungselement (14) angeordnet ist.

3. Höhenverstellbare Kraftfahrzeug-Armauflage nach Anspruch 1 oder 2, **gekennzeichnet durch** ein elektrisches und/ oder mechanisches und/ oder pneumatisches Halteelement (36) zur Lagefixierung des Armauflageelementes (10).

4. Höhenverstellbare Kraftfahrzeug-Armauflage nach Anspruch 3, **dadurch gekennzeichnet, dass** das Halteelement (36) einen Hebelmechanismus zum Lösen und/ oder Fixieren des Armauflageelementes (10) aufweist.

5. Höhenverstellbare Kraftfahrzeug-Armauflage nach Anspruch 3 oder 4, **dadurch gekennzeichnet, dass** das Halteelement (36) einen Rast- und/oder Klemmmechanismus aufweist.

6. Höhenverstellbare Kraftfahrzeug-Armauflage nach einem der Ansprüche 1 - 5, **gekennzeichnet durch** ein elektrisch- und/ oder mechanisch und/oder pneumatisch betätigbares Betätigungselement (26) zur Höhenverstellung,

7. Höhenverstellbare Kraftfahrzeug-Armauflage nach Anspruch 6, dass das Betätigungselement (26) einen Stellmotor (28) aufweist.

8. Höhenverstellbare Kraftfahrzeug-Armauflage nach Anspruch 7, **dadurch gekennzeichnet, dass** der Stellmotor (28) ein bewegliches Stellelement (30) antreibt, das mit einem ortsfesten Stellelement (32) zusammenwirkt.
